# EUROPEAN PATENT APPLICATION

(11) **EP 1 486 978 A2**
(43) Date of publication of application: **15.12.2004**
(21) Application number: 04252505.5
(22) Date of filing: 29.04.2004
(51) Int. Cl.: G11B 23/50

(54) **Method and device for destructing signals stored on compact disc**

(30) Priority: 11.06.2003 US 460692; 11.06.2003 US 460691
(71) Applicant: Taiwan Bor Ying Corporation, Panchiao City, Taipei Hsien (Prefecture) 220 (TW)
(72) Inventor: Weng, Jin-Sheng, Nan-Kang District, Taipei 115 (TW)
(74) Representative: Greene, Simon Kenneth

(57) **Abstract**

A device for destructing signals stored on compact disk includes a base, a punching pin, and a push lever. The base has a top stub for engaging with a central hole of a compact disk positioned on the base, a through hole corresponding to a Start Lead In (SLD) area on the compact disk, and an L-shaped arm portion holding a spring mechanism. The punching pin is vertically movably mounted in the spring mechanism and aligned with the SLD area, and the push lever is pivotally connected at an end to one side of the arm portion for pushing against an upper end of the punching pin. When the push lever is pivotally pushed downward, the punching pin is driven downward to punch a hole on the SLD area and ruin lead-in signals recorded thereon, preventing data stored on the compact disk from being read and disclosed.

## Description

The present invention relates to a method and device for destructing signals stored on a compact disk, and more particularly to a punching device adapted to punch holes on a compact disk, so that signals stored on the compact disk are ruined and protected from being read and undesirably disclosed.

In producing general compact disk (CD), video compact disk (VCD), digital video disk (DVD) and the like, signal data to be stored thereon are converted into a series of differently sized pits and lands on the disk through specific techniques. The signal data stored on the disk in this manner are then read using a laser beam.

When a disk becomes useless and is discarded, it forms a possible gate via which important signal data stored on the disk is undesirably disclosed. To avoid such undesirable disclosure of important signal data, it is preferable to destruct such signal data before the compact disk storing them is discarded.

A compact disk in use usually has a large quantity of data stored thereon. A common way to destruct the signals on the compact disk is to completely ruin and destruct any and all data stored on the compact disk. However, since the data stored on the compact disk are distributed over considerably wide areas, it would take a lot of labor and material to have the data completely destructed. And, there is still possibility a complete destroy of data is not successfully achieved. In the event of an incomplete destroy, data stored on the compact disk may still be undesirably disclosed.

As a matter of fact, there is an area among the data storing areas on each compact disk being particularly assigned to record lead-in signals for all other data stored on the compact disk. This area is usually referred to as the Start Lead In (SLD) and located within an annular area having an overall diameter about 46mm. That is, a radial distance between the SLD area and a center of the compact disk is about 23mm. When the lead-in signals in this area are destructed, it would be impossible to read all other data stored on the compact disk.

According to a first aspect, the device of the present invention for destructing signals stored on compact disk is as claimed in claim 1. The device mainly includes a base, a punching pin, and a push lever. The base is provided on a top at predetermined positions with a stub for engaging with a central hole of a compact disk positioned on the base, a through hole corresponding to the Start Lead In (SLD) area on the compact disk, and an L-shaped arm portion provided at one side of the base to extend upward and then toward a central portion of the base for holding a spring mechanism thereto. The spring mechanism includes, for example, a spring chamber provided at an inner end of the arm portion, and a spring positioned in the spring chamber. The spring chamber is provided at a bottom with a through hole to communicate with a lower side of the arm portion. The punching pin is vertically movably mounted in the spring in the spring chamber. The punching pin has a lower end adapted to pass through the hole on the bottom of the spring chamber to align with and reach at the SLD area on the compact disk, and an upper end provided with a flange for pressing against an upper end of the spring. The push lever is pivotally connected at an end to one side of the L-shaped arm portion via a pivot pin, and provided at a lower side with a protruded push contact for pushing against the upper end of the punching pin. When the push lever is pushed downward to pivotally turn about the pivot pin, the punching pin is driven downward by the push contact to punch a hole on the SLD area and ruin lead-in signals recorded thereon, preventing other signal data stored on the compact disk from being read and disclosed.

The present invention provides a device for destructing signals stored on compact disk, so that data stored on a compact disk to be discarded could not be read and are therefore protected against undesirable disclosure.

The invention also relates to a method according to claim 7. In the method of the present invention, lead-in signals recorded on the Start Lead In (SLD) area of a compact disk to be discarded are ruined, so that all other data stored on the compact disk could not be read and are therefore protected against undesired disclosure.

The structure and the technical means adopted by the present invention to achieve the above and other objects can be best understood by referring to the following detailed description of the preferred embodiments and the accompanying drawings, wherein
Fig. 1 is a sectional view of a general compact disk showing the location of the SLD area thereof;
Fig. 2 is a top plan view of a device for destructing signals stored on compact disk according to an embodiment of the present invention;
Fig. 3 is a sectioned side view of the device of Fig. 2.

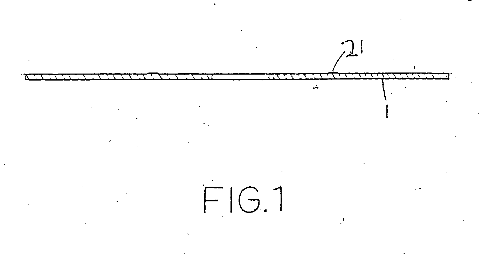

Please refer to Fig. 1 that is a sectional view of a general compact disk 1 on which a plurality of data storing areas are included. One of these data storing areas is referred to as Start Lead In (SLD) 21, on which lead-in signals for data stored on each compact disk are recorded. The SLD 21 is located within an annular area on the compact disk 1 having an overall diameter about 46mm. That is, a radial distance between the SLD area and a center of the compact disk 1 is about 23mm. When the lead-in signals recorded on the SLD 21 are ruined, it would be impossible to read all other data stored on the compact disk 1. Thus, the present invention provides a method of destructing the SLD 21 to effectively prevent undesirable disclosure of data stored on the compact disk 1 that is to be discarded.

In a first embodiment of the method of the present invention for destructing the SLD 21, a suitable scraping device is used to scrape off the lead-in signals on the SLD 21. In a second embodiment of the present invention, a punching device is used to punch holes on the SLD 11. In a third embodiment of the present invention, a certain type of acid liquor is used to corrode the lead-in signals on the SLD 21. In a fifth embodiment of the present invention, a particular program is used to erase the lead-in signals on the SLD 21. Once the SLD 21 is destructed in any one of the above-mentioned or other suitable ways, it would be impossible to read any and all other data stored on the compact disk 1. In this manner, the undesirable disclosure of any data on the discarded compact disk 1 can be effectively prevented. The method of the present invention for destructing data on the discarded compact disk 1 is therefore simple and convenient but complete and effective.

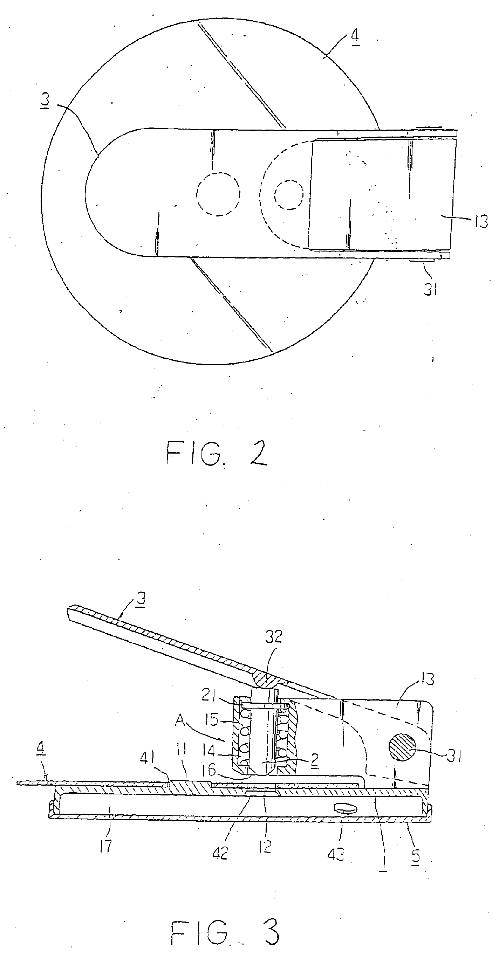

Please refer to Figs. 2 and 3 that are top plan view and sectioned side view, respectively, of a device for destructing signals stored on compact disk according to an embodiment of the present invention. As shown, the device mainly includes a base 1, a punching pin 2, and a push lever 3.

The base 1 is provided on a top at a predetermined position with a stub 11, so that a compact disc 4 to be discarded may be positioned on the base 1 with a central hole 41 engaged with the stub 11. The base 1 is also provided on the top with a through hole 12 to correspond to a Start Lead In (SLD) area on the compact disk 4 positioned on the base 1. An L-shaped arm portion 13 is provided at one side of the base 1 to extend upward and then toward a central portion of the base 1. The L-shaped arm portion 13 is internally provided with a spring mechanism A for providing an upward spring force to the punching pin 2 and the push lever 3. The spring mechanism A may include, for example, a spring chamber 14 provided in the L-shaped arm portion 13 and a spring 15 positioned in the spring chamber 14. The spring chamber 14 is provided at a bottom with a through hole 16 to communicate with a lower side of the L-shaped arm portion 13.

The punching pin 2 is located in the spring chamber 14 of the spring mechanism A with the spring 15 mounted therearound. A lower end of the punching pin 2 is adapted to pass through the hole 16, and an upper end of the punching pin 2 is provided with a flange 21 for pressing against an upper end of the spring 15. When the punching pin 2 is pushed downward, the flange 21 is also downward moved to compress the spring 15. When the punching pin 2 is no longer downward pushed, the compressed spring 15 is released to produce a restoring force that moves the punching pin 2 upward again. As can be seen from Fig. 2, the vertically movable punching pin 2 is aligned with the SLD area on the compact disk 4.

The push lever 3 is pivotally connected at an end via a pivot pin 31 to an outer end of the L-shaped arm portion 13 opposite to the spring chamber 14. A downward protruded push contact 32 is provided at a lower side of the push lever corresponding to the upper end of the punching pin 2. The protruded push contact 32 preferably has a curved configuration that allows the push contact 32 to contact at different points with the upper end of the punching pin 2 while the push lever 3 is gradually pushed, so that the punching pin 2 is always vertically movable up and down in the spring chamber 14.

When the push lever 3 is downward pushed to pivotally turn about the pivot pin 31, the push contact 32 at the lower side of the push lever 3 is brought to contact with and drive the punching pin 2 downward to punch a hole 42 on the SLD area on the compact disk 4. The hole 42 ruins lead-in signals recorded on the SLD area and prevents other data stored on the compact disk 4 from being read and accordingly protects these data against undesirable disclosure when the compact disk 4 is discarded. It is known the compact disk 4 is usually made of a PC plastic material through injection molding and has a thickness about 1.2mm. The punching pin 2 of the destructing device of the present invention is structurally strong enough to easily penetrate the compact disk 4 and form the punched hole 42 within the SLD area of the compact disk 4.

The base 1 has an open bottom to define a hollow space 17. A bottom cover 5 is removably connected to the open bottom of the base 1 to openably close the space 17 for collecting chips 43 punched off the compact disk 4 therein.

In brief, the present invention provides a device for destructing signals stored on a compact disk. The device includes a punching pin that is aligned with and adapted to easily penetrate the SLD area on the compact disk and ruin lead-in signals recorded thereon, so that all other data stored on the compact disk are prevented from reading and accordingly undesirable disclosure when the compact disk is discarded.

## Claims

1. A device for destructing signals stored on compact disk, said compact disk including a plurality of data storing areas for storing signal data therein and a Start Lead In (SLD) area for recording lead-in signals for said signal data, and any ruin of said lead-in signals on said SLD area resulting in failure of reading said signal data stored on said compact disk, said device comprising:
being provided on a top at predetermined positions with an upward extended stub for engaging with a central hole of said compact disk positioned on said base, a through hole corresponding to said SLD area on said compact disk, and an arm portion located at one side of said base to extend upward and then toward a central portion of said base for holding a spring mechanism to provide spring force;
a punching pin vertically movably mounted in said spring mechanism to align with said SLD area on said compact disk positioned on said base; and
a push lever having an end pivotally connected via a pivot pin to one side of said arm portion spaced from said spring mechanism, said push lever being provided at a lower side with a downward protruded push contact for contacting with and pushing against an upper end of said punching pin;
whereby when said push lever is pivotally pushed downward, said push contact is in contact with and drives said punching pin downward to compress said spring mechanism and penetrate said SLD area on said compact disk, so that a punched hole is formed on said SLD area to destruct said lead-in signals recorded on said SLD area and thereby prevent said signal data stored on said compact disk from being read and disclosed.

2. A device according to claim 1 wherein said base has an open bottom to define a hollow space therein, and said arm portion is L-shaped.

3. The device for destructing signals stored on compact disk as claimed in claim 1 or 2, wherein said spring mechanism includes a spring chamber provided in said arm portion and a spring positioned in said spring chamber; said spring chamber being provided at a bottom with a through hole to communicate with a lower side of said arm portion, and said punching pin being located in said spring chamber with said spring mounted therearound; and wherein said punching pin has a lower end adapted to pass through said through hole at the bottom of said spring chamber, and an upper end provided with a flange for pressing against a top of said spring.

4. The device for destructing signals stored on compact disk as claimed in claim 1, wherein said protruded push contact has a curved configuration.

5. The device for destructing signals stored on compact disk as claimed in claim 1, 2, 3 or 4, wherein said base includes a bottom cover removably connected to the open bottom thereof to openably close said hollow space in said base for collecting chips punched off said SLD area of said compact disk.

6. The device for destructing signals stored on compact disk as claimed in claim 2, wherein said base includes a bottom cover removably connected to the open bottom thereof to openably close said hollow space in said base for collecting chips punched off said SLD area of said compact disk.

7. A method of destructing signals on compact disk, comprising the step of destructing a Start Lead In (SLD) area on said compact disk to ruin lead-in signals recorded on said SLD, such that all other data stored on said compact disk could not be read at all after said lead-in signals recorded on said SLD are ruined, and any undesirable disclosure of said data stored on said compact disk may be prevented when said compact disk is discarded after said SLD is destructed.

8. The method of destructing signals on compact disk as claimed in claim 7, wherein said SLD is destructed by using a suitable scraping device to scrape off said lead-in signals recorded on said SLD.

9. The method of destructing signals on compact disk as claimed in claim 7 or 8, wherein said SLD is destructed by using a punching device to punch holes on said SLD.

10. The method of destructing signals on compact disk as claimed in claim 7, 8 or 9, wherein said SLD is destructed by using a type of acid liquor to corrode said lead-in signals recorded on said SLD.

11. The method of destructing signals on compact disk as claimed in claim 7, 8, 9 or 10, wherein said SLD is destructed by erasing said lead-in signals recorded thereon with a program.
